# EUROPEAN PATENT SPECIFICATION

(11) **EP 4 399 442 B1**
(45) Date of publication and mention of the grant of the patent: **05.08.2026**
(21) Application number: 22778063.2
(22) Date of filing: 06.09.2022
(51) Int. Cl.: F21S 11/00, E04D 13/03

(54) **LIGHT DIRECTING APPARATUS AND METHOD**
LICHTLENKUNGSVORRICHTUNG UND -VERFAHREN
APPAREIL ET PROCÉDÉ DE DIRECTION DE LUMIÈRE

(30) Priority: 07.09.2021 GB 202112683
(43) Date of publication of application: 17.07.2024
(73) Proprietor: Suntile UK Ltd, Winterbourne, Bristol BS36 1SE (GB)
(72) Inventor: SKUSE, Tony, Winterbourne, Bristol BS36 1SE (GB)
(74) Representative: Jones, Cerian
(86) International application number: PCT/IB2022/058376
(87) International publication number: WO 2023/037244

(56) References cited:
- WO-A1-2005/068744
- DE-U1- 202005 009 483
- US-A1- 2013 314 795
- US-A1- 2014 268 347
- US-A1- 2014 268 863

## Description

### FIELD

This disclosure relates generally to methods, apparatus and systems for illuminating an interior space within a building, and in particular for enabling natural light to be directed from the exterior of the building into the interior through a roof or wall. The disclosure is particularly suited for, but not limited to, use in respect of illuminating rooms and other interior spaces in buildings which require additional light.

### BACKGROUND

It is not uncommon for buildings to require additional light in interior spaces which are poorly lit. However, the use of additional windows in the building's facades or walls may be undesirable or not possible. Light directing ducts can be used in such situations to bring natural light into a living or working space within the building. The duct is a tube (pipe) which runs from a light transmission element provided in an inlet (i.e. aperture) in the roof of the building to the ceiling of a desired interior space such as a room, thus channelling the additional light to the poorly lit area. The panel may sometimes be known as a "tile" or "skylight". The interior surface(s) of the duct may be made from or covered with a light reflective material to facilitate transmission. One end of the duct (the mouth) attaches to the light transmission panel, often by friction fit although other connecting means are also known in the art. It is clearly advantageous for such a ducting apparatus to facilitate transmission of the light in a direct line or at least with as few impediments as possible. Therefore, absorption or re-direction of the light waves is to be avoided or at least reduced as much as possible so that as much light as possible exits the ducting into the destination space.

Commonly known light ducts can comprise straight tubes running from roof to ceiling such that the light inlet in the roof must be positioned directly above the light outlet. This necessitates the tube being cut to match the interior angle of the roof such that the duct's mouth fits against the light transmissive panel. It also means that the location of the duct outlet in the interior space is restricted. Such known ducts may be made of metal and/or comprise a reflective inner surface. Other commonly known ducts may comprise a flexible concertina hose (resembling those typically used in respect of tumble dryer venting apparatus) which can be cut to the required length and secured at the light inlet/outlet ends. A disadvantage of such arrangements is that they do not readily lend themselves to the application of highly reflective interior coatings or the larger scale dimensions needed for light-directing purposes. Moreover, the numerous angles on the interior such hoses impede the transmission of light.

Other disadvantages relating to known light-directing apparatus includes manufacture, storage and transportation requirements which are costly in terms of space, energy and financial resources. Also, it is important that light directing apparatus is simple, easy and quick to install because personnel working on the installation of such apparatus need to be able to complete their tasks as quickly as possible, but known solutions can be awkward, time consuming or even unsafe to install if they require cutting or handling of sharp edges. WO2005/068744 A1 discloses an example of a tubular skylight and as known in the prior art.

An improved solution has now been devised.

### SUMMARY

Systems, methods, devices and apparatus in accordance with the present disclosure are described herein and defined in the appended claims. The disclosure provides improved and enhanced solutions (methods, devices, apparatus and/or systems) for illuminating an interior space within a building. Additionally, or alternatively, it may be described as a light directing solution. In one form of wording, it may be described as a light duct. The light duct may be a telescopic, collapsible and/or interlocking light duct.

The invention provides a light directing system according to claim 1, which is arranged and/or configured for directing light from the exterior or a building to a location inside the building. The system comprises a plurality of telescopic light directing elements. The light directing elements may also be referred to as "duct elements". They are telescopic in that the light directing system comprises concentric elements which can move into and/or out of one another. The elements are arranged for movement relative to each other such that the system is reconfigurable between a collapsed configuration and an extended configuration. Also, the elements can slide relative to each other. In use, the plurality of light directing elements forms a (preferably hollow or substantially hollow) tube or conduit (which may be called a light duct), and has an interior arranged for transmission of light from the exterior to the interior of the building through the interior.

The light directing elements are telescopic in that they are proportioned, sized or otherwise configured so that they fit entirely or to a substantial degree one inside the other when in the collapsed configuration. However, they are able to slide into the expanded configuration to form an elongate, tubular light directing duct. When in use in the expanded configuration, the system comprises a sequence of light directing elements, one above the other. This provides numerous advantages in that the system can be stored and transported in a compact form, saving costs and resources. It can also be quickly and easily configured into the expanded configuration for installation in a building simply by pulling one end of the system upwards towards the roof of the building or letting the other end fall downwards towards the interior ceiling of the building. No costly installation tools are required to assemble the light directing system, which can be provided ready assembled in collapsed form. The elements may be scored or otherwise arranged to facilitate transportation and storage by enabling the elements to collapse into a flattened state.

Preferably, one some or all of the plurality of light directing elements comprises a tube or pipe. Preferably, the light directing element(s) allow light to travel through the pipe's interior space without impediment. Preferably, the light directing elements are provided adjacent one another such that, in the expanded configuration, little or no light is able to exit from the light duct into the surrounding environment. Preferably, there is a degree of overlap between adjacent duct elements when in use/in the installed configuration to prevent leakage of light, or a membrane or shield is provided between duct elements which acts as a barrier to prevent such leakage. Preferably, the membrane is flexible and/or foldable so that it can collapse when the light duct is arranged into the collapsed configuration.

The individual light directing elements can take any shape or cross section desired or suitable for a given installation. In some embodiments, the element(s) are substantially square or rectangular in cross section as shown in the accompanying figures. In other embodiments, they may be substantially circular in cross section.

In a preferred embodiment, the light directing elements may be tapered i.e. wider at one end than the other, and/or lessening in diameter. In use i.e. after installation at a site, they may provide a (interlocking, telescopic) tapered light duct. One, some or all elements may be provided as having an exterior profile of a frustum. According to the invention, one, some or all elements are provided as a hollow frustum. In use, the conjoined elements may form a light duct that has, substantially, the profile of a hollow frustum. This provides the advantage that as the duct widens towards the lower/bigger end, there is less leakage of light from gaps between adjoining elements.

In some embodiments, the element(s) may comprise an interior surface which comprises or is provided with a light reflective substance. At least one of the elements may be comprise a flexible, malleable and/or pliable body. This provides the advantage that, when in the extended configuration, the system can be adjusted and formed so as to direct the light around obstacles in the building interior and to a desired location. In use, when the light directing system is in the expanded configuration, the element which provides the system's mouth is positioned above the element that provides the system's outlet.

Preferably, one of the light-directing elements forms a mouth for the light directing system and may be arranged for:
i) connection of the light directing system to a roof of the building; and/or
ii) connection to a light transmissive panel to allow light from the exterior of the building to enter the light directing system.

Preferably, one of the light-directing elements forms an outlet for the light directing system and may arranged for:
i) connection of the light directing system to a ceiling inside the building; and/or
ii) connection to a light transmissive panel to allow light from the light directing system to arrive at the location inside the building.

Preferably, at least one of the plurality of light directing elements comprises a first locking element arranged to secure it in position relative to a second light directing element within the plurality. This provides the advantage that the elements can be prevented from collapsing from the expanded configuration into the collapsed configuration under the influence of gravity.

Preferably, the first locking element is arranged to engage and/or cooperate with a second locking element provided on the second light directing element.

The first locking element may comprise a component arranged to project away from a surface of the at least one light directing element so as to engage with the second locking component provided on the second light directing element. Preferably, the first locking element impedes movement of the second light directing element in at least one direction, e.g. downwards towards the earth to prevent disintegration, disconnection or collapse of the light directing system from the extended configuration due to gravity.

In one or more embodiments, the first locking element may comprise a hook or tab. The second locking element may comprise at least one hole, aperture, recess or eye arranged to receive or engage with a portion of the at least one light directing element. The said portion may be the first locking element provided on the at least one light directing element.

In a preferred embodiment, the first locking element may be:
i) a perforated or cut portion of the at least one light directing element; and/or
ii) arranged for movement between a deployed configuration and a non-deployed configuration; and/or
iii) a lip, hook, ledge or projection that is angled away from and/or projects from the body of the light directing element, preferably wherein the lip, projection, ledge or hook is provided at the edge and/or perimeter of an end of a light directing element.

This may be, for example, a tab which is cut out of, but still connected to, the element body so that it may be pushed inwards or outwards. When it is pushed inwards in use, the portion of the tubular element which is above will drop down and be caught (trapped) by the locking mechanism. In some embodiments, the tab may be provided on the higher tubular element and may be caught in a hole or recess provided in the element below it, preventing further downward movement of the upper element.

The first and/or second locking element may comprise a lip, hook or projection that is angled away from and/or projects from the body of the light directing element. Hereafter, this will be referred to as a "lip" for ease of reference. The lip may be provided at one or both ends a light directing element. For example, the perimeter of one or both ends of the element may be bent over or angled to form a lip, ledge or hook. This may serve as a locking mechanism in certain embodiments.

Preferably, each light directing element in the plurality comprises a first end and a second end. Also preferably, at least one light directing element in the plurality is provided with:
i) a first locking element at or towards its first end and a second locking element at or towards its second end; and/or
ii) a first locking element at or towards its first end for cooperation with a second locking element provided on another light directing element.

In accordance with one or more embodiments, one, some or all of the light directing elements may be tapered such that the mouth at one end is wider than the mouth at the other end of the element. Therefore, the element(s) may be tapered. Thus, in embodiments where the element(s) are circular in cross section, the element(s) may be frustoconical in configuration. The elements may be arranged such that, in use, they form a light directing duct that is wider at the bottom (i.e. towards the ground) than at the top (i.e. towards the sky).

The disclosure also provides one or methods, including a method of installing a light directing duct substantially as described, claimed and/or illustrated in the figures herein.

### LIST OF FIGURES

Aspects and embodiments of the present disclosure will now be described, by way of example only, and with reference to the accompany drawings, in which:
Figures 1a through 1d illustrates a light duct formed in accordance with an illustrative embodiment of the disclosure and from various views.
Figures 1a, 1 c and 1d show the example embodiment in an extended configuration. Figure 1b shows the embodiment in a collapsed configuration. Figures 1c and 1d show the embodiment angled or tilted in use.
Figure 2 provides an alternative illustration of Figure 1b, wherein an embodiment of the disclosure is shown in a collapsed configuration.
Figure 3 shows a top (mouth) section of an embodiment of the disclosure.
Figure 4 shows an intermediate duct section (i.e. a section that is neither a mouth section nor an outlet (exit) section) in accordance with an embodiment of the disclosure.

### DETAILED DESCRIPTION OF ILLUSTRATIVE EMBODIMENTS

For the purposes of illustration, we now describe an example embodiment of the present disclosure.

In an example embodiment, the disclosure provides a light duct. This may be described as an interlocking, telescopic light duct. A preferred embodiment comprises a plurality of hollow light directing elements 2. Each element 2 may be tubular and may form a segment or section of a light directing duct system 1, with each element having a first end that permits light to enter the element 2, a second end arranged to allow light to exit the element, and a body arranged to allow light to travel between the two ends. Therefore, each light directing element 2 may be thought of as a duct portion, segment or sub-section because they can be combined to form a longer light transmitting pipe 1. Hereafter, we will refer to the elements 2 as "duct sections" for ease of reference.

In the examples shown in the figures, each duct section 2 is substantially square or rectangular in cross section. However, other embodiments may comprise alternatively shaped elements (e.g. circular tubes) with alternative cross-sectional profiles or shapes without departing from the scope of the present disclosure.

The duct sections 2 can be made of or comprise any material suitable for use in a light transmissive duct. In a preferred embodiment, the duct section(s) comprise a flexible or pliable material which facilitates bending and movement of the duct sections to facilitate installation at a given site. In some embodiments, the duct sections comprise a thin, pliable metal with a polished, light reflective surface. The interior surface of at least one of the duct sections may comprise a light reflective substance that provides a mirrored interior and facilitates transmission of light from a source to a destination.

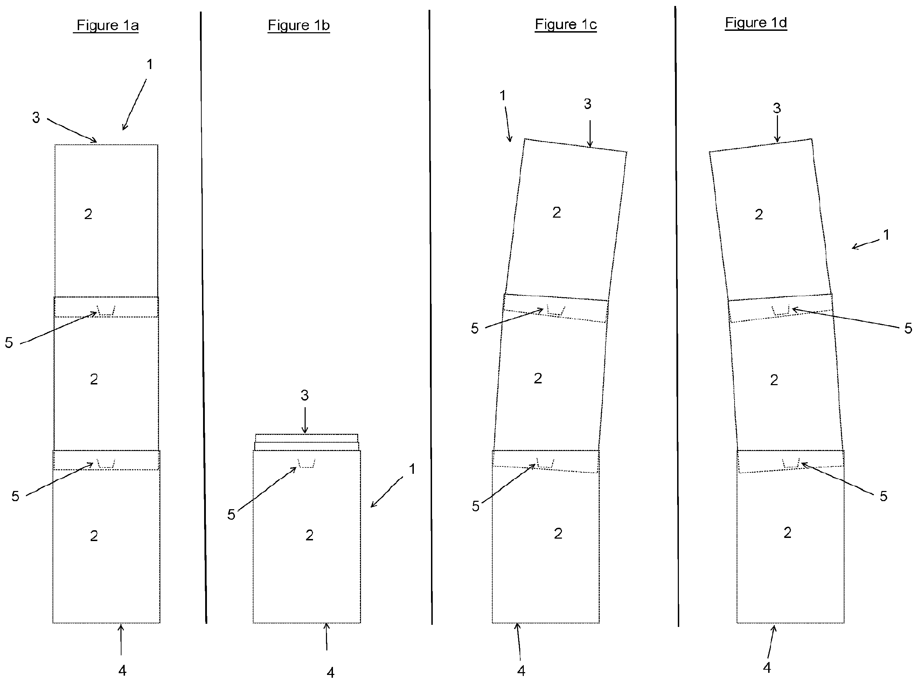

In use, a plurality of duct sections is arranged or configured for mutual connection or juxtaposition so as to form a complete light directing duct 1 of a desired length for the distance between the roof and ceiling in a specific installation, as shown in figures 1a, 1c and 1d. Therefore, the duct sections 2 are provided adjacent to one another such that each duct section adjoins at least one other duct section. The adjoining duct sections 2 are arranged sequentially to form the complete, elongate light duct 1 with each section being provided adjacent to at least one other section. The light duct 1 comprises, therefore, a tube or pipe formed of adjoining duct sections 2 which are arranged to channel light from a first (mouth) end (the mouth) of the duct to the opposite (outlet) end.

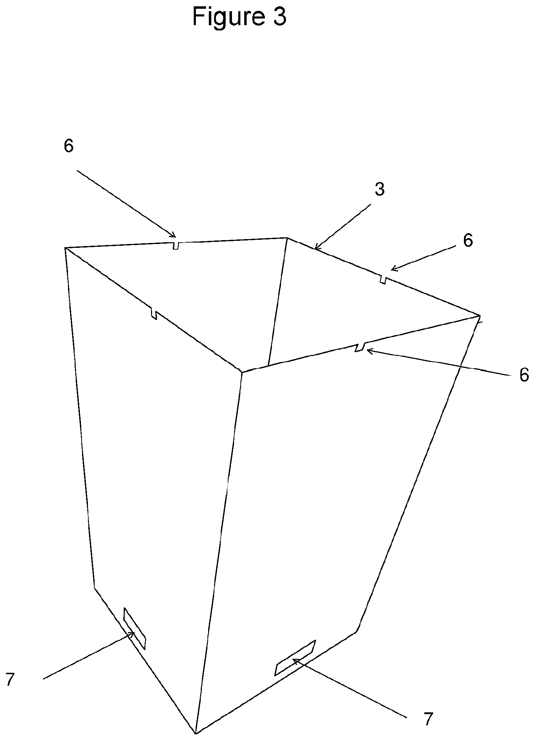

With reference to Figure 3, a duct section is provided at the first end of the light duct and is suitable for connection to a light transmissive light panel provided at a light inlet of the roof (not shown in the figures). We refer to this duct section as the "mouth section". A first end 3 of the mouth section, which we refer to as the "mouth end", attaches to the light inlet by any suitable means known in the art. The mouth section adjoins another duct section at or towards the end that is distal (opposite) to its mouth end. The mouth section may be provided with notches or holes 6 at or towards the edge or perimeter 3 of the mouth section to form an air passage between the duct and the fixture that attaches it to the roof in use. This prevents or alleviates the build up of condensation.

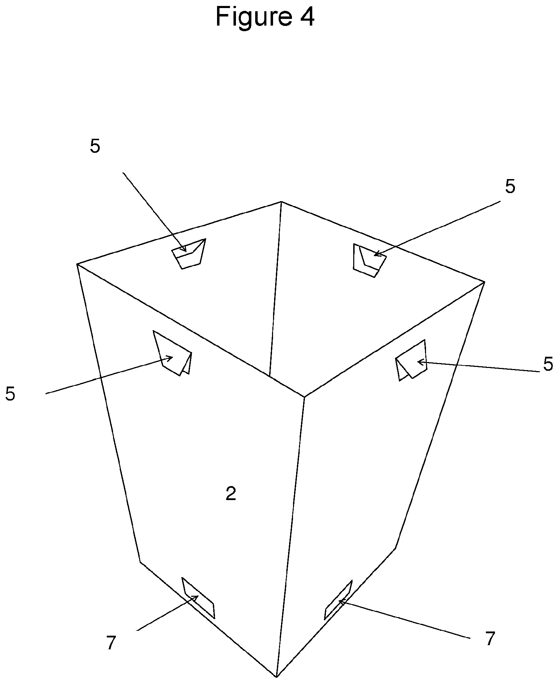

With reference to Figure 3, the mouth end may only be provided with a locking mechanism 7 at or towards its distal end as only the distal end will attach to another duct section 2 in use. In the embodiment of Figure 3, this is shown as an aperture 7 which is arranged to receive a tab 5 of an intermediate or outlet section (see figure 4) so as to prevent disconnection of the duct sections in use.

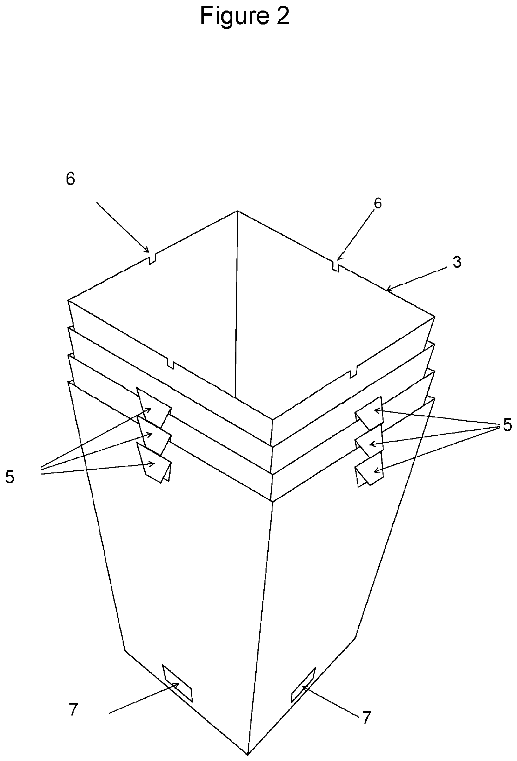

A duct section is also provided at the opposite, second end of the light duct, distal to the mouth section. We refer to this second section as the outlet (or "exit") section. It allows light that has passed through the duct from the mouth to exit the duct and enter the interior space at the desired location. Therefore, the outlet section comprises an outlet end 4 which is suitable for connection to an outlet in a ceiling of an interior space by any suitable means known in the art. In use, the outlet section adjoins another duct section at or towards its second end. In Figure 2, the largest (outlet) duct section is shown having an aperture 7 for engaging with an adjacent, lower duct section but as the outlet section does not connect to a lower duct section this can be dispensed with in practice.

In some embodiments, where the distance between the inlet in the roof and the outlet in the ceiling is short, the light duct may comprise only two duct sections - a mouth section and an outlet section. Typically, however, a longer duct will be required to span the distance from the inlet to the outlet, and so the duct comprises one or more "duct body" sections provided between the mouth and outlet sections. Herein, we refer to a duct section which is neither a mouth nor an outlet section an "intermediate" section, as shown in Figure 4. Each intermediate section adjoins another duct section at each of its ends, whereas the mouth and outlet sections only adjoin another duct section at one of their respective ends. Therefore, in the embodiment shown in Figure 4, each intermediate section has a first locking mechanism (tab 5) which will engage with a second locking mechanism (aperture 7) of another, adjacent duct section.

### TELESCOPIC DUCT ARRANGEMENT

With reference to the accompanying Figures and in accordance with embodiments of the disclosure, at least two duct sections are configured and/or dimensioned to adjoin or abut each other in a manner that permits, facilitates or enables the ducts to move e.g. slide relative to each other.

The duct sections are arranged such that they fit telescopically inside each other, as concentric elements, as shown in Figures 1 a to 1d, and Figure 2. Therefore, each duct section is dimensioned to be smaller or larger than the duct section(s) that it is adjacent to in use, and to enable one duct section to fit inside its adjacent section. It should be noted that in the accompanying figures the duct section providing the mouth end 3 which fits against or to the light inlet may be shown as smaller than the duct section which provides the outlet end 4 at the desired interior space. In some embodiments, at least one, but preferably some or all, of the duct sections is tapered. In such cases, the at least one duct section comprises a tapered tube or pipe section wherein one end of the duct section is larger than the other end. Phrased another way, the walls of the duct section(s) may be tapered, such that they are not parallel to each other.

Therefore, the light duct 1 may be arranged to be wider/larger at the exit end than the mouth end, as this can aid transmission and dispersal of light into the interior space. However, this is for illustration purposes only and the disclosure is not limited in this regard. Other embodiments may comprise a mouth section which is larger relative to the outlet section.

Preferably, the duct sections 2 are arranged or configured to facilitate angling, kinking or bending of the completed light duct during use, as shown in figures 1c and 1d. This may be achieved in a variety of ways, such as providing angled, pliable and/or flexible portions within the duct section or providing the at least one duct portion such that it can be tilted relative to at least one other adjacent duct section in the completed light duct. In one embodiment, shown in Figures 1c and 1d, the telescopic relationship between the adjoining sections provides room for movement of the sections relative to one another. This relative movement can be in any direction - lateral, upward, downward. This enables the light duct to be configured in use such that it directs light to the desired location easily, quickly and without professional or experienced personnel.

Each duct section can be made larger or smaller relative to its adjoining neighbour in terms of internal volume to allow more or less space between the walls of the neighbouring sections, and, accordingly, more or less flexibility. The more space between the adjoining walls of the adjacent telescopic elements/sections when fitted together, the more room there is to form bends or curves in the duct when installed in use. This allows the ducting to come from the angled roof to bend and reach the level, interior ceiling outlet square on and fit into the outlet of the ceiling without impediment. This allows light to travel through the duct without interruption or hitting hard edges. The duct sections may have any cross-sectional profile that is suitable. In one embodiment, the duct section(s) may be substantially circular, oval or ellipsoid in cross section, while in a preferred embodiment they are substantially square or rectangular in cross section.

This telescopic configuration provides several technical advantages including, but not limited, as follows.

The apparatus can be delivered to its installation site completely, or nearly completely, assembled, but in a collapsed state as shown in Figure 1b. This contrasts with prior art arrangements which comprise boxes or units of components which need to be assembled at the site. Upon arrival at the installation site, the collapsed arrangement of Figure 1b and figure 2 can be easily and quickly expanded by pulling up on the mouth section or by elevating the mouth section and allowing the other duct sections to fall downwards into the configuration of Figure 1a under the influence of gravity.

In the collapsed configuration, at least one of the duct sections, (but preferably some or all), are arranged to fit entirely or substantially within its larger, neighbouring duct section. By "substantially" we mean that a substantial portion, or a majority, more than half of the duct section is arranged to fit within its larger neighbouring section. This provides the advantage that the duct sections are able to collapse fully one inside the other, and the entire ducting collapses to a more compact arrangement when not in use.

This eliminates or at least reduces the time, labour and knowledge required to install the light directing apparatus compared to existing arrangements.
- Embodiments of the disclosure can be utilised by personnel who are not professional installers or roofing personnel, thus providing a more versatile arrangements that can be utilised by a wider variety of installers, with ease
- As the light duct is telescopic and adjusts to the required length between the inlet and the outlet, the need to cut the ducting is eliminated; this not only reduces the amount of time and effort required for installation, but it also reduces the risk of creating sharp edges and thus causing potential injury; the apparatus of the disclosure is, therefore, a safer arrangement compared to the prior art
- The apparatus allows for relative movement of the duct sections side to side, back and forth as well as up and down; this facilitates installation in interior spaces such as lofts etc. where obstacles such as beams etc. can exist and need to be navigated around. The relative movement and flexibility of the duct sections facilitates installation around such obstacles with ease, again providing an improved ducting solution.
- As each duct section fits fully or substantially into the previous/next section, the duct sections can be slid inside each other to form a compact yet complete duct. This reduces the resources required for packaging, storage and transportation.

### SECURING MECHANISM

Additionally, or alternatively, at least one securing mechanism 5, 7 may be provided on at least one of the duct sections 2 in order to facilitate securing, connection or holding of the duct section to an adjacent duct section. The securing mechanism may also be referred to as a locking mechanism, but this should not be interpreted as meaning that the mechanism holds the elements in a permanently secured relationship, as in one or more embodiments they may not be. The securing mechanism 5, 7 may be arranged to provide permanent or temporary securing of the duct sections 2 to prevent disintegration or disconnection of the duct sections 2, although a temporary securement is preferred because it allows the duct sections to be separated and re-used in another instalment. This provides a more resource efficient arrangement.

The securing mechanism 5, 7 may be arranged to prevent adjoining duct sections 2 from moving or sliding apart and thus causing a break in the light duct which would allow light to dissipate from the duct into the environment instead of being directed to the outlet end 4.

In a preferred embodiment, the securing mechanism 5 may be provided as an integral feature of the duct section, rather than an additional component that is subsequently fixed to it. This provides a more efficient solution which is easy to manufacture and less costly. In a preferred embodiment and as shown in the accompanying Figures, the securing mechanism may comprise a first and a second locking component/element, wherein the first and second components are provided on separate duct sections and arranged for engagement with each other. In such an embodiment, the first locking mechanism may be a cut out/perforated notch or tab portion 5 which is partially attached to a first duct section but can be angled away from the duct section when required, either towards or away from the interior of the duct section. In one or more embodiments, the securing mechanism is provided on the body of the duct section(s) and spaced away from an edge of the body.

In Figures 2 and 4, the tabs are shown projecting outwardly relative to the body of the duct elements (i.e. away from the inner space within the light duct). However, it should be noted that in use and/or in some embodiments, one or more of the securing mechanisms 5 may be arranged in an alternative configuration. For example, the tabs 5 on two opposing faces of a substantially square or rectangular duct may be pushed outwardly as shown in figure 2 while the tabs 5 on the other two, remaining faces may be pushed inwardly (i.e. towards the central, longitudinal axis of the duct 1). Having tabs pushed in opposing (inward/outward) directions provides the advantage that the degree of relative movement between duct sections 2 can be restricted while in the collapsed and also the extended configurations so that the duct sections are not able to come apart while in transport or in situ after installation.

The first locking mechanism (e.g. tab) of the duct section 2 can be pushed inwardly towards an interior of the assembled duct 1 such that, in use, after the telescopic duct sections have been expanded from their collapsed configuration, it prevents the (preferably) smaller adjoining duct section which is positioned above from falling downwards under the influence of gravity and into the collapsed configuration within its neighbouring (larger) section. One or more securing mechanisms may be provided per duct section but in a preferred arrangement multiple securing mechanisms are provided, preferably one on each opposing face of the duct section, so that a stable and secure arrangement is provided.

In accordance with a preferred embodiment, at least one duct section comprises at least one aperture (hole or slot) 7 at or towards the outlet end 4 and at least one tab 5 at or towards its distal mouth end 3.The holes are provided towards but spaced from an end, edge or rim of the duct body. They may be provided towards the end, edge or rim, but with a (preferably small) portion of the duct section body provided between the hole and the end of the duct section. This is shown in Figures 2 and 3, where holes 7 in the wall or body of the duct section is shown, rather than a notch at the end of the body/wall perimeter.

Thetabs can be pushed in or out depending on the functionality required by the particular installation's needs. When one duct section slides out of the adjoining section below, the tab 5 catches the hole or slot 7 provided on the adjoining duct section beneath, thus prohibiting it from sliding out and duct falling apart. It should also be noted that tabs can be provided which can be pushed out relative to the duct rather than in towards the interior. This enables the tab to catch the top (mouth) of the duct section below. The opposing tabs can be pushed out catching the top of the duct below. This stops the ducts sliding together and getting jammed when packaged and in transit.

Thus, embodiments of the disclosure provide a pliable, flexible ducting system which avoids the loss of light associated with prior art arrangements that suffer from light losses of up to 80%. The disclosure allows a rigid but pliable, secure and stable solution that is user friendly and more efficient to store, transport, package and install.

Preferably, the tabs 5 are provided spaced from an end, edge or rim of the duct body. They may be provided towards the end, edge or rim, but with a (preferably small) portion of the duct section body provided between the tab and the end of the duct section. Preferably, one or more of the tabs is substantially V or U shaped. Preferably, while the tabs(s) function as hooks, they are not hooked shaped in that they comprise a body that is flat or substantially flat rather than angled, hooked or curved. The tab is formed from a portion of the wall body and is detached from the wall/body of the duct section at a distal end of the tab but attached to the wall/body at a proximal end of the tab. The tab is formed by one or more incisions made to the wall of the duct to allow movement of the distal tab end relative the duct wall while the tab remains fixed to the wall at the proximal end where no incision is made. The incision(s) may define and/or the perimeter of the moveable tab body, while not connecting at a start/finish point, thus leaving a portion uncut so as to leave the tab body attached to the duct section at the proximal end. Pushing against the tab body enables it, therefore, to hinge around the attached proximal portion and move relative to the wall/body of the duct section. Thus, the tab(s) comprise a planar body which is attached to the duct section at a proximal end of the tab but detached at a distal end of the tab to enable movement of the tab body relative to a wall/body of the duct section.

This configuration of the tab(s) provides a simpler locking mechanism than taught in the prior art, which can be quickly made by cutting or stamping of the duct section wall, without fixing or moulding any additional parts. This provides a more efficient method of manufacture and reduces associated manufacturing costs and resources. It also means that the tabs can lie flat and in line with the duct section wall when in storage, such that the tabs do not protrude away from the duct section wall. By contrast, prior art arrangements such as US2013/0314795 A1 which comprise projecting hooks can be snapped or damaged.

Such a tab 5 and hole 7 system allows the duct section to be stamped out of one single portion of material without the need for separate fixings or additional materials such as those required in US2013/0314795, which requires the use of spring clips that the complicated and expensive to manufacture and more difficult to use. By contrast, the tab and hold arrangement of the present invention saves labour, resources, time and cost. The use of an aperture for the second locking mechanism which receives the tab provides a cheaper and quicker manufacturing method compared to prior art arrangements such as WO/2005/068744 A1, which comprise the use of a recess that is formed by rolling the material of the duct section. Moreover, an aperture provides a more secure connection of the duct sections in use, as there is less chance of the tab disengaging from the aperture (see figures 2 and 3) than from a recess. With the recess arrangement, if something were to knock against the external wall of the duct it would cause the tab to press inwardly and potentially allow it to slide past the recess, thus enabling the duct sections to separate. This problem is overcome by the present arrangement which uses an aperture to fully engage with the tab.

However, in some embodiments other locking mechanisms can be used such as a hook and eye arrangement, for example, could be used in conjunction with the tab and hole arrangement. In an certain embodiments, the functionality of the tab 5 of figure 4 can be provided by curling the top (mouth) rim or edge of the duct section over, towards the bottom (outlet) end of the duct section. Additionally, or alternatively, the bottom (outlet) rim or edge of the duct section can be bent or curled upwards towards the mouth end of the duct section. If a gap is provided between the curled lip and the body of the duct section, this can serve as a locking or securing mechanism which catches or traps the edge of an adjoining duct section and prevents further travel of the duct section(s) relative to each other. In such embodiments, the aperture 7 may be dispensed with. This provides an efficient solution in terms of manufacture and installation, and the rounded edges of the duct sections are safer to handle than sharp, unrounded edges.

### IN-USE EXAMPLE OF AN ILLUSTRATIVE EMBODIMENT

An illustrative embodiment may be provided, configured, installed and/or used as described below with reference to the accompanying figures. The duct comprises a plurality of telescopic duct sections such that, during transportation and storage they can collapse inside one another but in use they extended into an elongate configuration having a longitudinal, central axis and wherein the largest, outlet duct section is below (i.e. nearest the ground) the other duct sections are positioned above it, with the smallest, mouth section at the top i.e. furthest away from the outlet section, with one or more intermediate duct sections between the outlet and the mouth sections. When the installer wishes to instal the apparatus (s)he holds the mouth section in an elevated position such that the other, larger duct section(s) are able to fall downwards under the influence of gravity.

The mouth section is then secured to the inner surface of the building roof, and the outlet section is secured to a surface within the building. The degree of movement between the duct sections depends upon the difference in relative sizes between the concentric duct sections. The tighter or more snug the fitting between the adjoining sections, the less movement there will be between them. Also, the more rigid the material used for construction of the duct sections, the less readily they will be able to bend and conform to any desired angle during installation. In a preferred embodiment, however, the duct section(s) are made of a thin, pliable metal which has a polished or reflective inner surface to aid transmission of light to its desired destination.

As shown in Figure 3, the top duct section has an upper edge which provides the mouth of the complete duct pipe and fixes to the inner surface of the roof in use. One or more notches 6 are provided at the perimeter of the mouth 3, to provide vent holes which align with openings or slots in a housing provided at the top of the duct in-situ to prevent or at least alleviate the formation of condensation. The mouth section of the light directing duct 1 may attach to the light transmissive panel in the roof via any suitable means.

As a gap is provided between each concentric duct section, this allows tabs on opposing faces of the duct to be pushed inwards and/or outwards relative to the central axis of the duct section. Preferably, each duct section comprises tabs 5 on each opposing face or side. Preferably, there will be one or more tabs that are pushed inwardly (towards the longitudinal axis of the duct pipe) and one or more tabs that are pushed outwardly away from the longitudinal axis. The tabs can be pushed into these positions upon or shortly after manufacture so that the duct can be provided with inwardly and outwardly projecting tabs on the sections. The inwardly projecting tabs prevent inner duct sections from rising upwards and thus disintegration of the duct when in the collapsed configuration for storage and transportation. In the embodiment shown in the figures, the outward and downwardly projecting tabs are provided on or towards the upper edge of the duct section, and prevent downward movement of higher duct sections and thus disintegration of the duct pipe in its extended configuration, because the outwardly projecting tabs of a higher section will catch on the upper portion or an aperture/recess provided towards the lower, outlet end of the lower duct section.

In some embodiments, the top and/or bottom edge of at least one of the duct elements may comprise a lip, hook or projection (that we will refer to as the "lip" for convenience). The lip is angled away from the body of the duct section to form a lip, ledge or hook. In some embodiments, the lip may be curled over completely so that it bends back onto the body of the duct section, while in other embodiments there is a gap between the body of the duct section and the lip such that the edge of another duct section may be received between the lip and the duct section body, thus serving as a locking mechanism in certain embodiments to prevent movement of the duct section or a further duct section beyond a point or position relative to each other.

An advantage of this feature is that the lip can provide a perimeter which is relatively blunt and, therefore, avoids or reduces the likelihood of injury from handling a sharp-edged element during installation or packing etc. As duct elements are often made of thin metal, it is not uncommon for people handling them during manufacture or installation to cut themselves. Therefore, angling the end(s) of a duct element can provide a safety mechanism. In embodiments where the lip is arranged to form a mechanism which interlocks or engages with a portion of an adjacent duct section, such as the perimeter or edge of the adjacent element, the lip provides a dual functionality and further reduces manufacturing and installation requirements.

### CONCLUDING REMARKS

It should be noted that the above-mentioned embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". Throughout this specification the word "comprise", or variations such as "includes", "comprises" or "comprising", will be understood to imply the inclusion of a stated element, integer or step, or group of elements, integers or steps, but not the exclusion of any other element, integer or step, or group of elements, integers or steps. The singular reference of an element does not exclude the plural reference of such elements and vice-versa. The mere fact that certain measures are recited in mutually different dependent claims does not indicate that a combination of these measures cannot be used to advantage.

## Claims

1. A light directing system (1) for directing light from the exterior of a building to a location inside the building, the system comprising:
a plurality of telescopic light directing elements (2) arranged for slidable movement relative to each other such that the system is reconfigurable between a collapsed configuration and an extended configuration;
wherein some or all of the light directing elements (2) are telescopic in that they are proportioned, sized or otherwise configured so that they fit entirely or to a substantial degree, i.e. more than half, one inside the other when the system is in the collapsed configuration;
**characterized in that** one, some or all of the light directing elements (2) provide a hollow frustum.

2. A system according to claim 1 wherein:
at least one of the plurality of light directing elements comprises a first locking element (5) arranged to secure it in position relative to a second light directing element within the plurality.

3. A system according to claim 2 wherein the first locking element:
i) is arranged to engage and/or cooperate with a second locking element provided on the second light directing element; and/or
ii) comprises a planar body which is attached to the at least one light directing element at a proximal end of the first locking element and detached from the at least one light directing element at a distal end of the first locking element to enable movement of the body relative to a wall of the at least one light directing element.

4. A system according to claim 2 or 3 wherein the first locking element comprises:
a component arranged to project away from a surface of the at least one light directing element so as to engage with the second locking component provided on the second light directing element.

5. A system according to claim 4 wherein the first locking element impedes or prevents movement of the second light directing element in at least one direction.

6. A system according to claim 4 or 5 wherein:
i) the first locking element is a hook or tab; and/or
ii) the first locking element is a hook or tab and is substantially V or U shaped; and/or
iii) the first and/or second locking element is provided spaced from an end, edge or rim of the at least one light directing element; and/or
iv) the first locking element is formed by one or more incisions made to the at least one light directing element.

7. A system according to claims 3 to 6 wherein the second locking element comprises a hole, aperture, recess or eye arranged to receive or engage with a portion of the at least one light directing element, preferably wherein said portion is or comprises the first locking element provided on the at least one light directing element.

8. A system according to claims 2 to 7 wherein the first locking element is:
i) a perforated or cut portion of the at least one light directing element; and/or
ii) arranged for movement between a deployed configuration and a non-deployed configuration; and/or
iii) a lip, hook, ledge or projection that is angled away from and/or projects from the body of the light directing element, preferably wherein the lip, projection, ledge or hook is provided at or towards the edge and/or perimeter of an end of a light directing element.

9. A system according to any preceding claim, wherein each light directing element in the plurality comprises a first end and a second end; and at least one light directing element in the plurality is provided with:
i) a first locking element at or towards its first end and a second locking element at or towards its second end; and/or
ii) a first locking element at or towards its first end for cooperation with a second locking element provided on another light directing element.

10. A system according to any preceding claim wherein:
i) the plurality of light directing elements forms a tube or conduit having an interior for transmission of light from the exterior to the interior of the building through the interior; and/or
ii) all of the elements in the plurality of light directing elements are configured to provide a hollow frustum such that, in use, the light directing system is configured as a hollow frustum with a wider base provided toward the ground and a narrower top provided towards the sky.

11. A system according to any preceding claim wherein one, some or all of the plurality of light directing elements comprises:
a tube or pipe; and/or
an interior surface which comprises or is provided with a light reflective substance; and/or
a flexible, malleable and/or pliable body.

12. A system according to any preceding claim wherein one of the light directing elements forms a mouth (3) for the light directing system and is arranged for:
i) connection of the light directing system to a roof of the building; and/or
ii) connection to a light transmissive panel to allow light from the exterior of the building to enter the light directing system.

13. A system according to any preceding claim wherein one of the light directing elements forms an outlet (4) for the light directing system and is arranged for:
i) connection of the light directing system to a ceiling inside the building; and/or
ii) connection to a light transmissive panel to allow light from the light directing system to arrive at the location inside the building.

14. A system according to any preceding claim wherein at least one perimeter or edge of at least one of the light directing elements is bent over, curled or angled relative to a body of the at least one light directing element; preferably wherein the perimeter or edge is or angled, curled of bent over to provide a lip, ledge or hook which functions as a locking mechanism operative to interact or engage with a further light directing element.

15. A method of manufacturing a light directing system according to any preceding claim, comprising the step of providing a plurality of light directing elements.

## Patentansprüche

1. Lichtlenkungssystem (1) zum Lenken von Licht von der Außenseite eines Gebäudes zu einem Ort im Inneren des Gebäudes, das System umfassend:
eine Vielzahl von teleskopischen Lichtlenkungselementen (2), die zur verschiebbaren Bewegung relativ zueinander angeordnet sind, sodass das System zwischen einer eingeklappten Konfiguration und einer erstreckten Konfiguration rekonfigurierbar ist;
wobei
einige oder alle der Lichtlenkungselemente (2) teleskopisch sind, dadurch dass sie so proportioniert, dimensioniert oder anderweitig konfiguriert sind, dass sie vollständig oder zu einem wesentlichen Grad, d. h. mehr als die Hälfte, ineinander passen, wenn das System in der eingeklappten Konfiguration ist;
**gekennzeichnet dadurch, dass**
eines, einige oder alle der Lichtlenkungselemente (2) einen hohlen Kegelstumpf bereitstellen.

2. System nach Anspruch 1, wobei:
mindestens eines der Vielzahl von Lichtlenkungselementen ein erstes Verriegelungselement (5) umfasst, das dazu angeordnet ist, es in Position relativ zu einem zweiten Lichtlenkungselement innerhalb der Vielzahl zu fixieren.

3. System nach Anspruch 2, wobei das erste Verriegelungselement:
i) dazu angeordnet ist, im Eingriff mit einem an dem zweiten Lichtlenkungselement bereitgestellten zweiten Verriegelungselement zu sein und/oder mit diesem zusammenzuwirken; und/oder
ii) einen planaren Körper umfasst, der an dem mindestens einen Lichtlenkungselement an einem proximalen Ende des ersten Verriegelungselements angebracht ist und von dem mindestens einen Lichtlenkungselement an einem distalen Ende des ersten Verriegelungselements abgelöst ist, um eine Bewegung des Körpers relativ zu einer Wand des mindestens einen Lichtlenkungselements zu ermöglichen.

4. System nach Anspruch 2 oder 3, wobei das erste Verriegelungselement Folgendes umfasst: eine Komponente, die dazu angeordnet ist, von einer Fläche des mindestens einen Lichtlenkungselements vorzuspringen, um so im Eingriff mit dem an dem zweiten Lichtlenkungselement bereitgestellten zweiten Verriegelungselement zu sein.

5. System nach Anspruch 4, wobei das erste Verriegelungselement eine Bewegung des zweiten Lichtlenkungselements in mindestens eine Richtung erschwert oder verhindert.

6. System nach Anspruch 4 oder 5, wobei:
i) das erste Verriegelungselement ein Haken oder eine Lasche ist; und/oder
ii) das erste Verriegelungselement ein Haken oder eine Lasche ist und im Wesentlichen V- oder U-förmig ist; und/oder
iii) das erste und/oder das zweite Verriegelungselement beabstandet von einem Ende, einer Kante oder einem Rand des mindestens einen Lichtlenkungselements bereitgestellt ist; und/oder
iv)das erste Verriegelungselement durch einen oder mehrere an dem Lichtlenkungselement ausgeführte Einschnitte ausgebildet ist.

7. System nach den Ansprüchen 3 bis 6, wobei das zweite Verriegelungselement ein Loch, eine Öffnung, eine Aussparung oder ein Auge umfasst, das/die dazu angeordnet ist, einen Abschnitt des mindestens einen Lichtlenkungselements aufzunehmen oder mit diesem im Eingriff zu sein, wobei bevorzugt der Abschnitt das an dem mindestens einen Lichtlenkungselement bereitgestellte erste Verriegelungselement ist oder umfasst.

8. System nach den Ansprüchen 2 bis 7, wobei das erste Verriegelungselement Folgendes ist:
i) ein perforierter oder geschnittener Abschnitt des mindestens einen Lichtlenkungselements; und/oder
ii) angeordnet zur Bewegung zwischen einer ausgefahrenen Konfiguration und einer nicht ausgefahrenen Konfiguration; und/oder
iii) eine Lippe, ein Haken, ein Absatz oder ein Vorsprung, die/der von dem Körper des Lichtlenkungselements weg abgewinkelt ist und/oder von diesem vorspringt, wobei bevorzugt die Lippe, der Vorsprung, der Absatz oder der Haken an oder hin zu der Kante und/oder dem Umfang eines Endes eines Lichtlenkungselements bereitgestellt ist.

9. System nach einem der vorhergehenden Ansprüche, wobei jedes Lichtlenkungselement in der Vielzahl ein erstes Ende und ein zweites Ende umfasst; und mindestens ein Lichtlenkungselement in der Vielzahl versehen ist mit:
i) einem ersten Verriegelungselement an oder hin zu seinem ersten Ende und einem zweiten Verriegelungselement an oder hin zu seinem zweiten Ende; und/oder
ii) einem ersten Verriegelungselement an oder hin zu seinem ersten Ende zur Zusammenwirkung mit einem an einem anderen Lichtlenkungselement bereitgestellten zweiten Verriegelungselement.

10. System nach einem der vorhergehenden Ansprüche, wobei:
i) die Vielzahl von Lichtlenkungselementen eine Röhre oder Leitung ausbildet, die ein Inneres zur Durchlässigkeit von Licht von der Außenseite zu dem Inneren des Gebäudes durch das Innere aufweist; und/oder
ii) alle Elemente in der Vielzahl von Lichtlenkungselementen dazu konfiguriert sind, einen hohlen Kegelstumpf bereitzustellen, sodass das Lichtlenkungssystem in Verwendung als ein hohler Kegelstumpf mit einer zum Boden hin bereitgestellten breiteren Basis und einem zum Himmel hin bereitgestellten schmaleren Oberteil konfiguriert ist.

11. System nach einem der vorhergehenden Ansprüche, wobei eines, einige oder alle der Vielzahl von Lichtlenkungselementen Folgendes umfasst:
eine Röhre oder ein Rohr; und/oder
eine Innenfläche, die eine lichtreflektierende Substanz umfasst oder mit dieser versehen ist; und/oder
einen flexiblen, verformbaren und/oder biegbaren Körper.

12. System nach einem der vorhergehenden Ansprüche, wobei eines der Lichtlenkungselemente ein Mundloch (3) für das Lichtlenkungssystem ausbildet und angeordnet ist für:
i) eine Verbindung des Lichtlenkungssystems mit einem Dach des Gebäudes; und/oder
ii) eine Verbindung mit einer lichtdurchlässigen Platte, um zu erlauben, dass Licht von der Außenseite des Gebäudes in das Lichtlenkungssystem eintreten kann.

13. System nach einem der vorhergehenden Ansprüche, wobei eines der Lichtlenkungselemente einen Ausgang (4) für das Lichtlenkungssystem ausbildet und angeordnet ist für:
i) eine Verbindung des Lichtlenkungssystems mit einer Decke im Inneren des Gebäudes; und/oder
ii) eine Verbindung mit einer lichtdurchlässigen Platte, um zu erlauben, dass Licht von dem Lichtlenkungssystem an dem Ort im Inneren des Gebäudes ankommt.

14. System nach einem der vorhergehenden Ansprüche, wobei mindestens ein Umfang oder eine Kante von mindestens einem der Lichtlenkungselemente relativ zu einem Körper des mindestens einen Lichtlenkungselements umgebogen, gewunden oder abgewinkelt ist, wobei bevorzugt der Umfang oder die Kante abgewinkelt, gewunden oder umgebogen ist, um eine Lippe, einen Absatz oder einen Haken bereitzustellen, der als Verriegelungsmechanismus dient und dazu betriebsfähig ist, mit einem weiteren Lichtlenkungselement zu interagieren oder im Eingriff mit diesem zu sein.

15. Verfahren zum Herstellen eines Lichtlenkungssystems nach einem der vorhergehenden Ansprüche, umfassend den Schritt des Bereitstellens einer Vielzahl von Lichtlenkungselementen.

## Revendications

1. Système de guidage de lumière (1) destiné à diriger la lumière depuis l'extérieur d'un bâtiment vers un emplacement à l'intérieur du bâtiment, le système comprenant :
une pluralité d'éléments télescopiques de guidage de lumière (2) agencés pour un mouvement de coulissement les uns par rapport aux autres de sorte que le système soit reconfigurable entre une configuration rétractée et une configuration déployée ;
dans lequel
certains ou la totalité des éléments de guidage de lumière (2) sont télescopiques en ce qu'ils sont proportionnés, dimensionnés ou autrement configurés de manière à s'insérer entièrement ou dans une mesure significative, c'est-à-dire plus de la moitié, l'un à l'intérieur de l'autre lorsque le système est dans la configuration rétractée ;
**caractérisé en ce que**
un, certains ou la totalité des éléments de guidage de lumière (2) forment un tronc de cône creux.

2. Système selon la revendication 1, dans lequel :
au moins un de la pluralité d'éléments de guidage de lumière comprend un premier élément de verrouillage (5) agencé pour le fixer en position par rapport à un deuxième élément de guidage de lumière au sein de la pluralité.

3. Système selon la revendication 2, dans lequel le premier élément de verrouillage :
i) est agencé pour entrer en prise et/ou coopérer avec un deuxième élément de verrouillage prévu sur le deuxième élément de guidage de lumière ; et/ou
ii) comprend un corps plan qui est rattaché audit au moins un élément de guidage de lumière à une extrémité proximale du premier élément de verrouillage et détaché dudit au moins un élément de guidage de lumière à une extrémité distale du premier élément de verrouillage afin de permettre le mouvement du corps par rapport à une paroi dudit moins un élément de guidage de lumière.

4. Système selon la revendication 2 ou 3, dans lequel le premier élément de verrouillage comprend :
un composant agencé pour faire saillie à distance d'une surface dudit au moins un élément de guidage de lumière de manière à entrer en prise avec le deuxième composant de verrouillage prévu sur le deuxième élément de guidage de lumière.

5. Système selon la revendication 4, dans lequel le premier élément de verrouillage entrave ou empêche le mouvement du deuxième élément de guidage de lumière dans ladite au moins une direction.

6. Système selon la revendication 4 ou 5, dans lequel :
i) le premier élément de verrouillage est un crochet ou une languette ; et/ou
ii) le premier élément de verrouillage est un crochet ou une languette et présente sensiblement une forme en V ou en U ; et/ou
iii) le premier et/ou le deuxième élément de verrouillage est prévu à distance d'une extrémité, d'un bord ou d'un rebord dudit au moins un élément de guidage de lumière ; et/ou
iv)le premier élément de verrouillage est formé par une ou plusieurs incisions réalisées dans ledit au moins un élément de guidage de lumière.

7. Système selon les revendications 3 à 6, dans lequel le deuxième élément de verrouillage comprend un trou, une ouverture, un évidement ou un œillet agencé pour recevoir ou entrer en prise avec une partie dudit au moins un élément de guidage de lumière, de préférence dans lequel ladite partie est ou comprend le premier élément de verrouillage prévu sur ledit au moins un élément de guidage de lumière.

8. Système selon les revendications 2 à 7, dans lequel le premier élément de verrouillage est :
i) une partie perforée ou découpée dudit au moins un élément de guidage de lumière ; et/ou
ii) agencé pour un mouvement entre une configuration déployée et une configuration non déployée ; et/ou
iii) une collerette, un crochet, un épaulement ou une saillie qui est incliné(e) à distance du corps de l'élément de guidage de lumière et/ou qui fait saillie à partir de celui-ci, de préférence dans lequel la collerette, la saillie, l'épaulement ou le crochet est prévu(e) au niveau ou vers le bord et/ou le périmètre d'une extrémité d'un élément de guidage de lumière.

9. Système selon l'une quelconque des revendications précédentes, dans lequel chaque élément de guidage de lumière de la pluralité comprend une première extrémité et une deuxième extrémité ; et au moins un élément de guidage de lumière de la pluralité est pourvu :
i) d'un premier élément de verrouillage au niveau ou vers sa première extrémité et d'un deuxième élément de verrouillage au niveau ou vers sa deuxième extrémité ; et/ou
ii) d'un premier élément de verrouillage au niveau ou vers sa première extrémité destiné à coopérer avec un deuxième élément de verrouillage prévu sur un autre élément de guidage de lumière.

10. Système selon l'une quelconque des revendications précédentes, dans lequel :
i) la pluralité d'éléments de guidage de lumière forme un tube ou un conduit présentant un intérieur destiné à la transmission de la lumière depuis l'extérieur vers l'intérieur du bâtiment à travers ledit intérieur ; et/ou
ii) la totalité des éléments de la pluralité d'éléments de guidage de lumière sont configurés pour former un tronc de cône creux de sorte que, en utilisation, le système de guidage de lumière est configuré sous la forme d'un tronc de cône creux avec une base plus large disposée vers le sol et un sommet plus étroit disposé vers le ciel.

11. Système selon l'une quelconque des revendications précédentes, dans lequel un, certains ou la totalité de la pluralité d'éléments de guidage de lumière comprend/comprennent :
un tube ou un tuyau ; et/ou
une surface intérieure qui comprend ou est pourvue d'une substance réfléchissant la lumière ; et/ou
un corps flexible, malléable et/ou pliable.

12. Système selon l'une quelconque des revendications précédentes, dans lequel l'un des éléments de guidage de lumière forme une entrée (3) pour le système de guidage de lumière et est agencé pour :
i) le raccordement du système de guidage de lumière à une toiture du bâtiment ; et/ou
ii) le raccordement à un panneau transmissif à la lumière afin de permettre à la lumière provenant de l'extérieur du bâtiment de pénétrer dans le système de guidage de lumière.

13. Système selon l'une quelconque des revendications précédentes, dans lequel l'un des éléments de guidage de lumière forme une sortie (4) pour le système de guidage de lumière et est agencé pour :
i) le raccordement du système de guidage de lumière à un plafond à l'intérieur du bâtiment ; et/ou
ii) le raccordement à un panneau transmissif à la lumière afin de permettre à la lumière provenant du système de guidage de lumière d'arriver à l'emplacement à l'intérieur du bâtiment.

14. Système selon l'une quelconque des revendications précédentes, dans lequel au moins un périmètre ou bord d'au moins un des éléments de guidage de lumière est replié, roulé ou incliné par rapport à un corps dudit au moins un élément de guidage de lumière ; de préférence dans lequel le périmètre ou bord est incliné, roulé ou replié afin de former une collerette, un épaulement ou un crochet qui fonctionne comme un mécanisme de verrouillage opérant pour interagir ou entrer en prise avec un élément de guidage de lumière supplémentaire.

15. Procédé de fabrication d'un système de guidage de lumière selon l'une quelconque des revendications précédentes, comprenant l'étape consistant à fournir une pluralité d'éléments de guidage de lumière.
